# EUROPEAN PATENT APPLICATION

(11) **EP 4 380 006 A1**
(43) Date of publication of application: **05.06.2024**
(21) Application number: 23204944.5
(22) Date of filing: 20.10.2023
(51) Int. Cl.: H02K 1/18, G01S 7/481, H02K 11/215, H02K 11/33, H02K 21/22, G02B 26/12

(54) **MOTOR ASSEMBLIES FOR LIDAR, LIDAR AND VEHICLE SYSTEM**

(30) Priority: 02.12.2022 CN 202223250558 U
(71) Applicant: Innovusion (Suzhou) Co., Ltd., Suzhou, Jiangsu 215000 (CN)
(72) Inventor: HAN, Jie, SUZHOU CITY (CN); LUO, Siwei, SUZHOU CITY (CN); ZHAO, Jian, SUZHOU CITY (CN)
(74) Representative: Sackin, Robert

(57) **Abstract**

Provided are a motor assembly (100) for a LiDAR, a LiDAR, and a carrier system. The motor assembly (100) includes: a mounting bottom plate (110) provided with a stator seat positioning groove (113); a circuit board (120) assembled in a positioning manner to the mounting bottom plate (110); a stator seat (130) located in the stator seat positioning groove (113) and assembled in a positioning manner to the stator seat (130) positioning groove, the stator seat (130) being provided with a stator positioning protrusion protruding away from the mounting bottom plate (110); and a wound stator (140) sleeved on the stator positioning protrusion (133) and assembled in a positioning manner to the stator positioning protrusion (133).

## Description

### TECHNICAL FIELD

The present disclosure relates to the technical field of LiDAR, and in particular, to a motor assembly for a LiDAR, a LiDAR, and a carrier system.

### BACKGROUND

LiDAR is a radar system which measures features of a target, such as position, speed, by transmitting a laser beam. With the continuous development of autonomous driving technology, the LiDAR has remedied the defects of traditional cameras and gradually become one of the most important sensors for autonomous driving or advanced assisted driving.

There are several common types of LiDAR, such as mechanical LiDAR, solid-state LiDAR, and semi-solid-state LiDAR. A rotating mirror LiDAR is a kind of semi-solid-state LiDAR. In the rotating mirror LiDAR, a motor assembly is one of core components thereof, in which a reflecting mirror is provided on a surface of an outer rotor of the motor assembly and reflects a laser beam to a range of influence of the space with the rotation of the outer rotor, so as to achieve comprehensive detection and scanning of the LiDAR.

In the rotating mirror LiDAR, the accuracy of a torque and a rotation speed output by the motor assembly is an important factor influencing the operating performance of the LiDAR.

### SUMMARY

Embodiments of the present disclosure provide a motor assembly of a LiDAR, a LiDAR and a carrier system, in order to improve the assembling accuracy of the motor assembly, improve the accuracy of a torque and a rotation speed output by the motor assembly, and thus achieve the purpose of improving the operating performance of the LiDAR.

According to an aspect of the present disclosure, provided is a motor assembly for a LiDAR, the motor assembly comprising: a mounting bottom plate provided with a stator seat positioning groove; a circuit board assembled in a positioning manner to the mounting bottom plate; a stator seat located in the stator seat positioning groove and assembled in a positioning manner to the stator seat positioning groove, the stator seat being provided with a stator positioning protrusion protruding away from the mounting bottom plate; and a wound stator sleeved on the stator positioning protrusion and assembled in a positioning manner to the stator positioning protrusion.

According to an aspect of the present disclosure, provided is a LiDAR, comprising the motor assembly in the previous aspect.

According to an aspect of the present disclosure, provided is a carrier system, comprising the LiDAR in the previous aspect.

When the motor assembly provided by the embodiments of the present disclosure is being assembled, the mounting bottom plate, the circuit board, the stator seat and the wound stator are positioned without tooling, so that it is relatively easy to control relative position accuracy, not only can an assembly process be simplified, but the assembling accuracy of the motor assembly can also be improved. In this way, the accuracy of a torque and a rotation speed output by the motor assembly can be improved, and the operating performance of the LiDAR can be effectively improved.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

More details, features, and advantages of the present disclosure are disclosed in the following description of exemplary embodiments with reference to the accompany drawings, in which:
FIG. 1 is a schematic structural top view of a motor assembly, in which a mounting bottom plate, a circuit board, a stator seat and a wound stator are in a positioning fit, according to some exemplary embodiments of the present disclosure;
FIG. 2 is a schematic structural top view of a mounting bottom plate of a motor assembly according to some exemplary embodiments of the present disclosure;
FIG. 3 is a schematic structural top view of a circuit board of a motor assembly according to some exemplary embodiments of the present disclosure;
FIG. 4 is a schematic structural top view of a stator seat of a motor assembly according to some exemplary embodiments of the present disclosure;
FIG. 5 is a schematic structural top view of a wound stator of a motor assembly according to some exemplary embodiments of the present disclosure; and
FIG. 6 is a schematic view of a longitudinal cross section of a basic structure of an outer rotor type brushless direct-current motor assembly.

### List of reference signs:

100 - Motor assembly; 110 - Mounting bottom plate; 120 - Circuit board; 130 - Stator seat; 140 - Wound stator;
111 - First positioning pin; 112 - Second positioning pin; 113 - Stator seat positioning groove; 1131 - First positioning portion;
1132 - Second positioning portion; 121 - Position sensor; 122 - First positioning hole; 123 - Second positioning hole;
131 - Third positioning portion; 132 - Fourth positioning portion; 133 - Stator positioning protrusion; 134 - Fifth positioning portion;
135 - Sixth positioning portion; 141 - Seventh positioning portion; 142 - Eighth positioning portion; 143 - Iron core; 144 - Winding;
145 - Slot; 114 - Circuit board receiving groove; 200 - Outer rotor type brushless direct-current motor assembly; 210 - Mounting bottom plate;
220 - Circuit board; 230 - Stator seat; 240 - Wound stator; 250 - Rotating shaft; 260 - Permanent magnet outer rotor; 270 - Reflecting mirror.

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered as illustrative in nature, and not as restrictive.

In the related art, some main components of a motor assembly of a LiDAR are positioned by means of tooling, so that the complexity of a process is increased, the positioning is also easily affected by the accuracy of the tooling, resulting in large fluctuations in the assembling accuracy of the motor assembly, and thus the stable accuracy of an output torque and a rotation speed of the motor assembly cannot be ensured.

In view of this, the embodiments of the present disclosure provide a motor assembly of a LiDAR, a LiDAR and a carrier system, in order to improve the assembling accuracy of the motor assembly, improve the accuracy of a torque and a rotation speed output by the motor assembly, and thus achieve the purpose of improving the operating performance of the LiDAR.

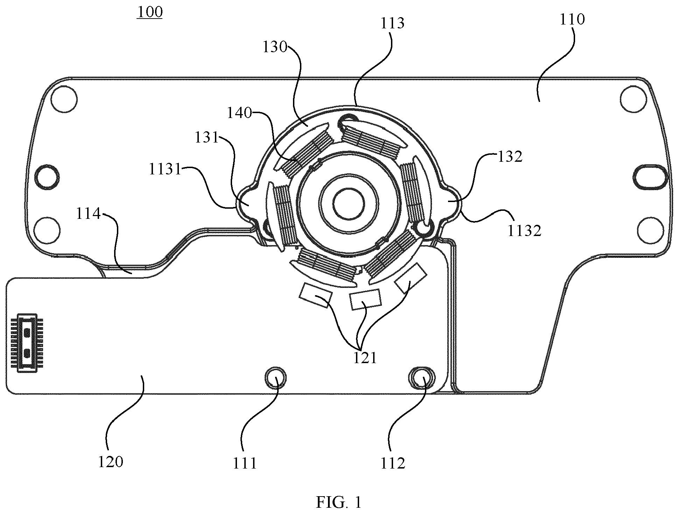

As shown in FIGS. 1 to 5, a motor assembly 100 for a LiDAR is provided in some embodiments of the present disclosure. The motor assembly 100 comprises a mounting bottom plate 110, a circuit board 120, a stator seat 130 and a wound stator 140. The mounting bottom plate 110 is provided with a stator seat positioning groove 113, the circuit board 120 is assembled in a positioning manner to the mounting bottom plate 110, and the stator seat 130 is located in the stator seat positioning groove 113 and is assembled in a positioning manner to the stator seat positioning groove 113; and the stator seat 130 is provided with a stator positioning protrusion 133 protruding away from the mounting bottom plate 110, and the wound stator 140 is sleeved on the stator positioning protrusion 133 and is assembled in a positioning manner to the stator positioning protrusion 133. In FIG. 1, only some main components of the motor assembly 100 are shown.

In the embodiments of the present disclosure, positioning assembly between two structures can be understood as that parts of the two structures that are joined with each other or adjacent to each other have the same basic dimension, with a tolerance zone satisfying a certain relationship, such that the two structures can mutually define their positions, and the structures are more stable and have a higher connection accuracy after fixed connection. After the circuit board 120 and the mounting bottom plate 110 are positioned and the stator seat 130 and the mounting bottom plate 110 are positioned, they may be fixedly connected by means of fasteners such as screws or bolts, and the embodiments of the present disclosure do not specifically limit the fixed connection method of these components.

In the design of the motor assembly 100 in the embodiments of the present disclosure, it is relatively easy to control the relative position accuracy between any two of the mounting bottom plate 110, the circuit board 120, the stator seat 130 and the wound stator 140. Compared with the related art, the main components are positioned without tooling, so that the assembly process is simplified, the assembling accuracy of the motor assembly 100 can also be improved, the accuracy of a torque and a rotation speed output by the motor assembly 100 are thus improved, and the operating performance of the LiDAR can be effectively improved.

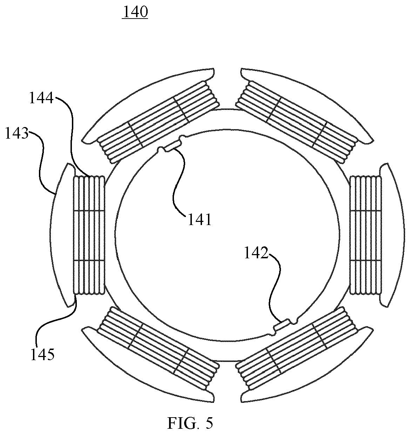

In the embodiments of the present disclosure, the motor assembly 100 may be an outer rotor type brushless direct-current motor assembly. The structural top view of the wound stator 140 is illustrated in FIG. 5 in which the wound stator comprises: an iron core 143 provided with a plurality of slots 145; and windings 144 wound around the slots 145 of the iron core 143.

In some embodiments, a plurality of position sensors 121 are provided on the circuit board 120. As shown in FIG. 1, in some embodiments of the present disclosure, the plurality of position sensors 121 may be magnetically sensitive position sensors, such as Hall sensors based on a Hall effect, and the number of position sensors is set to 3. The three Hall sensors are the minimum number of sensors required for keeping the brushless direct-current motor rotating. In other embodiments of the present disclosure, the position sensors 121 may also be photoelectric position sensors, electromagnetic position sensors, etc.

In some embodiments, the position sensors may also be provided on a component other than the circuit board. For example, the position sensors may be provided on the mounting bottom plate, and the present disclosure does not specifically limit the mounting positions of the position sensors.

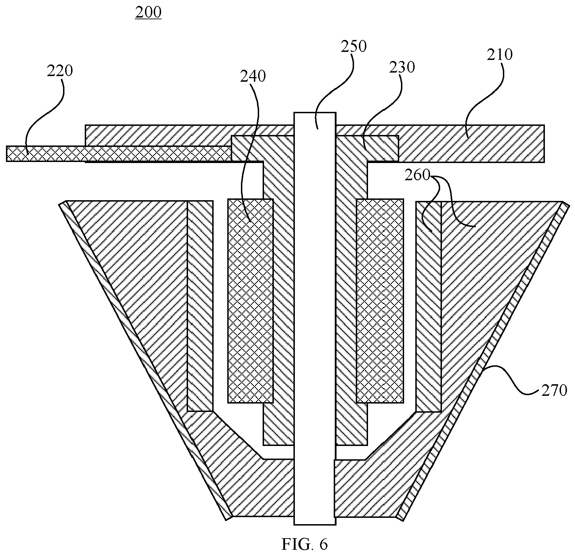

Referring to FIG. 6, which illustrates a basic structure of some outer rotor type brushless direct-current motor assemblies, the motor assembly 200 comprises a mounting bottom plate 210, a circuit board 220, a stator seat 230, a wound stator 240, a rotating shaft 250, and a permanent magnet outer rotor 260. The rotating shaft 250 rotates together with the permanent magnet outer rotor 260.

When the motor assembly 200 is applied to a rotating mirror LiDAR, a surface of the permanent magnet outer rotor 260 is further provided with a reflecting mirror 270 for reflecting laser light. The position sensors (not shown) on the circuit board 220 commutate the current of a winding on the wound stator 240 in a certain order according to the change of the position of the permanent magnet outer rotor 260. That is, the position sensors detect the position of a magnetic pole of the permanent magnet outer rotor 260 relative to the winding, and generate position sensing signals in determined positions, and after the position sensing signals are processed by a signal conversion circuit, a power switch circuit is controlled to switch the current of the winding according to a certain logical relationship. Such a motor assembly 200 uses a semiconductor switching element to achieve electronic commutation, and has the advantages of high reliability, no commutation sparks, low mechanical noise, etc.

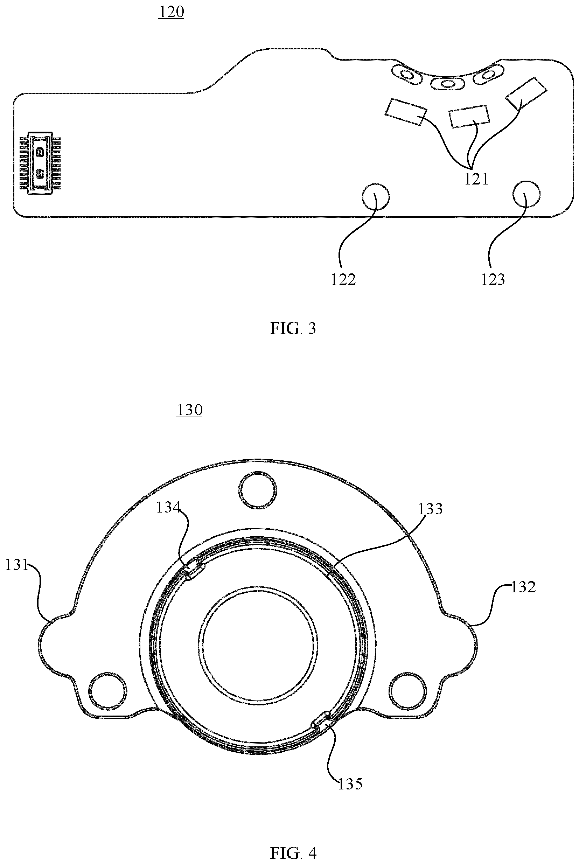

In the motor assembly, the arrangement positions of the position sensors are of vital importance, and generally involve a relative position relationship between the position sensors of all phases and a relative position relationship between each position sensor and each phase winding (a U-phase winding, a V-phase winding, and a W-phase winding). As shown in FIGS. 1 and 3, a plurality of position sensors 121 are provided on the circuit board 120, and the relative positional relationship between the position sensors 121 may be controlled in a mounting process of the circuit board 120 (e.g., a flexible printed circuit board (FPC)), and the relative positional relationship between each position sensor 121 and each phase winding may be controlled in the assembling process of the motor assembly 100.

As mentioned above, since the relative position accuracy between any two of the mounting bottom plate 110, the circuit board 120, the stator seat 130 and the wound stator 140 is relatively easy to control, higher relative position accuracy can be achieved between each position sensor 121 and each phase winding, so that the position sensors 121 can detect the positions more accurately, the accuracy of the torque and the rotation speed output by the motor assembly 100 can be further improved, and the operating performance of the LiDAR can be improved.

As shown in FIGS. 1, 2 and 3, in some embodiments, the mounting bottom plate 110 is provided with a first positioning pin 111 and a second positioning pin 112, and the circuit board 120 is provided with a first positioning hole 122 in a positioning fit with the first positioning pin 111, and a second positioning hole 123 in a positioning fit with the second positioning pin 112. The circuit board 120 may be mounted and positioned on the mounting bottom plate 110 by means of the fit between the first positioning pin 111 and the first positioning hole 122, and the fit between the second positioning pin 112 and the second positioning hole 123. For ease of mounting, the positioning fit between the first positioning pin 111 and the first positioning hole 122 and the positioning fit between the second positioning pin 112 and the second positioning hole 123 may be clearance fits.

As shown in FIGS. 1, 2 and 3, in some embodiments of the present disclosure, the mounting bottom plate 110 is further provided with a circuit board receiving groove 114, the circuit board receiving groove 114 is matched in shape with part of an edge of the circuit board 120, and at least a part of the circuit board 120 is located in the circuit board receiving groove 114. The first positioning pin 111 and the second positioning pin 112 are arranged in the circuit board receiving groove 114.

The circuit board receiving groove 114 may pre-define an assembling position of the circuit board 120 on the mounting bottom plate 110, reduce the overall thickness of the circuit board 120 after being assembled to the mounting bottom plate 110, and also provide a protective effect on the edge of the circuit board 120.

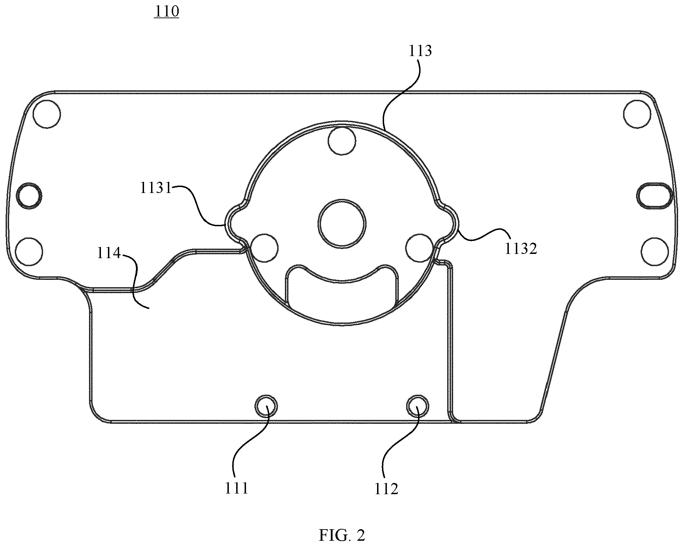

As shown in FIGS. 2 and 4, in some embodiments of the present disclosure, the stator seat positioning groove 113 is provided with a first positioning portion 1131 and a second positioning portion 1132 in a circumferential direction thereof, and the stator seat 130 is provided with a third positioning portion 131 in a positioning fit with the first positioning portion 1131, and a fourth positioning portion 132 in a positioning fit with the second positioning portion 1132.

In these embodiments, the stator seat 130 is mounted and positioned on the mounting bottom plate 110 by means of the fit between the first positioning portion 1131 and the third positioning portion 131, and the fit between the second positioning portion 1132 and the fourth positioning portion 132. For ease of mounting, the positioning fit between the first positioning portion 1131 and the third positioning portion 131 and the positioning fit between the second positioning portion 1132 and the fourth positioning portion 132 may be clearance fits.

As shown in FIGS. 2 and 4, in some embodiments of the present disclosure, the first positioning portion 1131 and the second positioning portion 1132 may be distributed in a radial direction of the stator seat positioning groove 113, for example, arranged oppositely in the radial direction of the stator seat positioning groove 113. The first positioning portion 1131 and the second positioning portion 1132 are uniformly distributed in the circumferential direction of the stator seat positioning groove 113, so that the stator seat 130 can be positioned more accurately, stably and reliably.

In some embodiments of the present disclosure, the positioning fit between the first positioning portion 1131 and the third positioning portion 131, and the positioning fit between the second positioning portion 1132 and the fourth positioning portion 132 are respectively convex-concave fits.

As shown in FIGS. 2 and 4, in some embodiments, in order to facilitate machining and manufacturing, the first positioning portion 1131 is designed as a first positioning recess, the second positioning portion 1132 as a second positioning recess, the third positioning portion 131 as a first positioning projection matched in shape with the first positioning recess, and the fourth positioning portion 132 as a second positioning projection matched in shape with the second positioning recess.

In the embodiments of the present disclosure, the shape matching of two structures may be understood as that parts of the two structures that are joined with each other or adjacent to each other have basically the same contour (in the case of ignoring errors). For example, among the two structures, one is a semi-circular-arc shaped depression, and the other is a semi-circular-arc shaped protrusion, and they may basically be joined together.

The specific shapes of the first positioning recess and the second positioning recess are not limited, for example, they may be triangular, square, in the shape of a semi-circular arc, etc. In some embodiments, orthographic projections of the first positioning recess and the second positioning recess on a reference plane parallel to the mounting bottom plate are each in the shape of a semi-circular arc. That is, the first positioning recess and the second positioning recess extend in a depth direction (in a direction perpendicular to the paper in FIG. 2) of the stator seat positioning groove 113 and are provided with arc-shaped surfaces, for example, semi-circular-arc shaped surfaces.

In some other embodiments of the present disclosure, the first positioning portion and the second positioning portion may also be positioning projections, or one of them is a positioning projection and the other is a positioning recess, and the third positioning portion and the fourth positioning portion are in a convex-concave fit with the first and second positioning portions.

As shown in FIGS. 4 and 5, in some embodiments of the present disclosure, the stator positioning protrusion 133 is provided with a fifth positioning portion 134 and a sixth positioning portion 135 in a circumferential direction thereof, and the wound stator 140 is provided with a seventh positioning portion 141 in a positioning fit with the fifth positioning portion 134, and an eighth positioning portion 142 in a positioning fit with the sixth positioning portion 135. The wound stator 140 is mounted and positioned on the stator seat 130 by means of the fit between the fifth positioning portion 134 and the seventh positioning portion 141, and the fit between the sixth positioning portion 135 and the eighth positioning portion 142. In some embodiments, the positioning fit between the fifth positioning portion 134 and the seventh positioning portion 141, and the positioning fit between the sixth positioning portion 135 and the eighth positioning portion 142 may be interference fits.

As shown in FIGS. 2 and 4, in some embodiments of the present disclosure, the fifth positioning portion 134 and the sixth positioning portion 135 may be distributed in a radial direction of the stator positioning protrusion 133, for example, arranged oppositely in the radial direction of the stator positioning protrusion 133, so that the wound stator 140 can be positioned more accurately, stably and reliably.

In some embodiments of the present disclosure, the positioning fit between the fifth positioning portion 134 and the seventh positioning portion 141, and the positioning fit between the sixth positioning portion 135 and the eighth positioning portion 142 are respectively convex-concave fits. As shown in FIGS. 4 and 5, in some embodiments, in order to facilitate machining and manufacturing, the fifth positioning portion 134 is designed as a third positioning recess, the sixth positioning portion 135 as a fourth positioning recess, the seventh positioning portion 141 as a third positioning protrusion matched in shape with the third positioning recess, and the eighth positioning portion 142 as a fourth positioning protrusion matched in shape with the fourth positioning recess.

As shown in FIGS. 4 and 5, in some embodiments, the seventh positioning portion 141 and the eighth positioning portion 142 are each a positioning key, and accordingly the third positioning recess and the fourth positioning recess are matched in shape with the seventh and eighth positioning portions. The positioning keys may be assembled on the wound stator 140 in an interference fit or by welding.

In some other embodiments of the present disclosure, the fifth positioning portion and the sixth positioning portion may also be positioning projections, or one of them is a positioning projection and the other is a positioning recess, and the seventh positioning portion and the eighth positioning portion are in a convex-concave fit with the fifth and sixth positioning portions.

In some embodiments of the present disclosure, the motor assembly 100 is a rotating mirror motor assembly applied to a LiDAR, and further comprises a permanent magnet outer rotor and a reflecting mirror fixed to a surface of the permanent magnet outer rotor which can be seen in FIG. 6.

The embodiments of the present disclosure further provide a motor, which comprises the motor assembly 100 described above, and other conventional components such as an enclosure, a fan, and a junction box. The motor is not limited in product type, for example, it may be an outer rotor motor. As the assembling accuracy of the motor assembly 100 is improved, the accuracy of a torque and a rotation speed output by the motor is accordingly improved. When applied to a LiDAR, the motor can support the LiDAR to provide a better operating performance.

The embodiments of the present disclosure further provide a LiDAR, comprising the motor assembly 100 of the foregoing embodiments. As the assembling accuracy of the motor assembly 100 is improved, the accuracy of the torque and the rotation speed output by the motor assembly 100 is accordingly improved, and the LiDAR can thus provide a better operating and detecting performance.

A main structure of the LiDAR generally comprises a laser, a receiver, a signal processing unit, and a rotating mechanism, wherein the rotating mechanism may comprise the motor assembly provided in the above embodiments of the present disclosure.

It can be understood that application scenarios of the LiDAR include but are not limited to various carrier systems, roadside detection devices, and other systems with a plurality of sensors that are used for dock monitoring, intersection monitoring, factories, etc. In some examples, the LiDAR may be provided, for example, on either side of a road or at an intersection of the road, so as to obtain road condition images of the road or related images of motor vehicles driving on the road. In some other examples, the LiDAR may be provided, for example, on a carrier system, and a plurality of LiDARs of the LiDAR are provided at different positions of the carrier system, so as to obtain objects in front of, behind or on two sides of the carrier system.

In some examples, the LiDAR may be a rotating mirror LiDAR, and a reflecting mirror is provided on the permanent magnet outer rotor of the motor assembly and driven to rotate by the motor assembly, such that the reflecting mirror can reflect a laser beam to a range of influence of the space.

The embodiments of the present disclosure further provide a carrier system, comprising the LiDAR in the foregoing embodiments.

The carrier system includes, but is not limited to, a vehicle, an aircraft, an unmanned aerial vehicle, a ship, etc. When the LiDAR serves as a vehicle-mounted sensor, the specific type of the vehicle is not limited. For example, the vehicle may be an autonomous vehicle. The specific mounting position of the LiDAR on the vehicle is not limited, for example, it may be mounted to the top or front of the vehicle. On the basis of the aforementioned beneficial effects of the LiDAR, the driving safety and driving experience of the vehicle are also improved accordingly.

Some exemplary solutions of the present disclosure are described below.

Solution 1. A motor assembly for a LiDAR, the motor assembly comprising:
a mounting bottom plate provided with a stator seat positioning groove;
a circuit board assembled in a positioning manner to the mounting bottom plate;
a stator seat located in the stator seat positioning groove and assembled in a positioning manner to the stator seat positioning groove, the stator seat being provided with a stator positioning protrusion protruding away from the mounting bottom plate; and
a wound stator sleeved on the stator positioning protrusion and assembled in a positioning manner to the stator positioning protrusion.

Solution 2. The motor assembly according to solution 1, wherein
the mounting bottom plate is provided with a first positioning pin and a second positioning pin; and
the circuit board is provided with a first positioning hole in a positioning fit with the first positioning pin, and a second positioning hole in a positioning fit with the second positioning pin.

Solution 3. The motor assembly according to solution 2, wherein
the mounting bottom plate is further provided with a circuit board receiving groove matched in shape with part of an edge of the circuit board, at least a part of the circuit board is located in the circuit board receiving groove, and the first positioning pin and the second positioning pin are arranged in the circuit board receiving groove.

Solution 4. The motor assembly according to any one of solutions 1 to 3, wherein
a plurality of position sensors are provided on the circuit board.

Solution 5. The motor assembly according to any one of solutions 1 to 4, wherein
the stator seat positioning groove is provided with a first positioning portion and a second positioning portion in a circumferential direction thereof; and
the stator seat is provided with a third positioning portion in a positioning fit with the first positioning portion, and a fourth positioning portion in a positioning fit with the second positioning portion.

Solution 6. The motor assembly according to solution 5, wherein
the first positioning portion and the second positioning portion are distributed in a radial direction of the stator seat positioning groove.

Solution 7. The motor assembly according to solution 5 or 6, wherein
the first positioning portion is a first positioning recess, and the second positioning portion is a second positioning recess; and
the third positioning portion is a first positioning projection matched in shape with the first positioning recess, and the fourth positioning portion is a second positioning projection matched in shape with the second positioning recess.

Solution 8. The motor assembly according to solution 7, wherein
orthographic projections of the first positioning recess and the second positioning recess on a reference plane parallel to the mounting bottom plate are each in the shape of a semi-circular arc, and the first positioning recess and the second positioning recess extend in a depth direction of the stator seat positioning groove and are provided with arc-shaped surfaces.

Solution 9. The motor assembly according to any one of solutions 1 to 8, wherein
the stator positioning protrusion is provided with a fifth positioning portion and a sixth positioning portion in a circumferential direction thereof; and
the wound stator is provided with a seventh positioning portion in a positioning fit with the fifth positioning portion, and an eighth positioning portion in a positioning fit with the sixth positioning portion.

Solution 10. The motor assembly according to solution 9, wherein
the fifth positioning portion and the sixth positioning portion are distributed in a radial direction of the stator positioning protrusion.

Solution 11. The motor assembly according to solution 9 or 10, wherein
the fifth positioning portion is a third positioning recess, and the sixth positioning portion is a fourth positioning recess; and
the seventh positioning portion is a third positioning protrusion matched in shape with the third positioning recess, and the eighth positioning portion is a fourth positioning protrusion matched in shape with the fourth positioning recess.

Solution 12. The motor assembly according to solution 11, wherein
the seventh positioning portion and the eighth positioning portion are each a positioning key.

Solution 13. The motor assembly according to any one of solutions 1 to 12, wherein
the motor assembly is a rotating mirror motor assembly, and further comprises a permanent magnet outer rotor and a reflecting mirror fixed to a surface of the permanent magnet outer rotor.

Solution 14. A motor, comprising a motor assembly according to any one of solutions 1 to 13.

Solution 15. A LiDAR, comprising a motor assembly according to any one of solutions 1 to 13.

Solution 16. A carrier system, comprising a LiDAR according to solution 15.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms "first", "second" and "third" are merely for descriptive purposes and should not be construed as indicating or implying relative importance or implicitly indicating the number of technical features indicated. Thus, the features defined with "first", "second" and "third" may explicitly or implicitly comprise one or more features. In the description of the present disclosure, the term "plurality of means two or more, unless otherwise explicitly and specifically defined.

In the present disclosure, unless expressly stated or defined otherwise, the terms such as "mounting", "connection", "connected" and "fixing" should be interpreted broadly, for example, either fixed or detachable connection, or integration; may be mechanical connection, or electrical connection, or communication; or may be a direct connection or an indirect connection by means of an intermediate medium, or may be communication between interiors of two elements or interaction between the two elements. For those of ordinary skill in the art, the specific meaning of the above terms in the present disclosure can be understood according to specific circumstances.

In the present disclosure, unless expressly stated or limited otherwise, the expression of the first feature being "above" or "below" the second feature may comprise the case that the first feature is in direct contact with the second feature, and may also comprise the case that the first and second features are not in direct contact but are contacted via another feature therebetween. Furthermore, the first feature being "over", "above" or "on" the second feature comprises the case that the first feature is directly or obliquely above the second feature, or merely indicates that the first feature is at a higher level than the second feature. The first feature being "below", "under" or "beneath" the second feature comprises the case that the first feature is directly or obliquely below the second feature, or merely indicates that the first feature is at a smaller level than the second feature.

This description provides many different embodiments or examples that can be used to implement the present disclosure. It should be understood that these various embodiments or examples are purely illustrative and are not intended to limit the scope of protection of the present disclosure in any way. On the basis of the disclosure of the description of the present disclosure, those skilled in the art will be able to conceive of various changes or substitutions. Any changes or substitutions shall fall within the scope of protection of the present disclosure. Therefore, the scope of protection of the present disclosure shall be subject to the scope of protection of the claims.

## Claims

1. A motor assembly for a LiDAR, the motor assembly comprising:
a mounting bottom plate provided with a stator seat positioning groove;
a circuit board assembled in a positioning manner to the mounting bottom plate;
a stator seat located in the stator seat positioning groove and assembled in a positioning manner to the stator seat positioning groove, the stator seat being provided with a stator positioning protrusion protruding away from the mounting bottom plate; and
a wound stator sleeved on the stator positioning protrusion and assembled in a positioning manner to the stator positioning protrusion.

2. The motor assembly according to claim 1, wherein
the mounting bottom plate is provided with a first positioning pin and a second positioning pin; and
the circuit board is provided with a first positioning hole in a positioning fit with the first positioning pin, and a second positioning hole in a positioning fit with the second positioning pin.

3. The motor assembly according to claim 2, wherein
the mounting bottom plate is further provided with a circuit board receiving groove matched in shape with part of an edge of the circuit board, at least a part of the circuit board is located in the circuit board receiving groove, and the first positioning pin and the second positioning pin are arranged in the circuit board receiving groove.

4. The motor assembly according to any one of claims 1 to 3, wherein
a plurality of position sensors are provided on the circuit board.

5. The motor assembly according to any one of claims 1 to 4, wherein
the stator seat positioning groove is provided with a first positioning portion and a second positioning portion in a circumferential direction thereof; and
the stator seat is provided with a third positioning portion in a positioning fit with the first positioning portion, and a fourth positioning portion in a positioning fit with the second positioning portion.

6. The motor assembly according to claim 5, wherein
the first positioning portion and the second positioning portion are distributed in a radial direction of the stator seat positioning groove.

7. The motor assembly according to claim 5 or 6, wherein
the first positioning portion is a first positioning recess, and the second positioning portion is a second positioning recess; and
the third positioning portion is a first positioning projection matched in shape with the first positioning recess, and the fourth positioning portion is a second positioning projection matched in shape with the second positioning recess.

8. The motor assembly according to claim 7, wherein
orthographic projections of the first positioning recess and the second positioning recess on a reference plane parallel to the mounting bottom plate are each in the shape of a semi-circular arc, and the first positioning recess and the second positioning recess extend in a depth direction of the stator seat positioning groove and are provided with arc-shaped surfaces.

9. The motor assembly according to any one of claims 1 to 8, wherein
the stator positioning protrusion is provided with a fifth positioning portion and a sixth positioning portion in a circumferential direction thereof; and
the wound stator is provided with a seventh positioning portion in a positioning fit with the fifth positioning portion, and an eighth positioning portion in a positioning fit with the sixth positioning portion.

10. The motor assembly according to claim 9, wherein
the fifth positioning portion and the sixth positioning portion are distributed in a radial direction of the stator positioning protrusion.

11. The motor assembly according to claim 9 or 10, wherein
the fifth positioning portion is a third positioning recess, and the sixth positioning portion is a fourth positioning recess; and
the seventh positioning portion is a third positioning protrusion matched in shape with the third positioning recess, and the eighth positioning portion is a fourth positioning protrusion matched in shape with the fourth positioning recess.

12. The motor assembly according to claim 11, wherein
the seventh positioning portion and the eighth positioning portion are each a positioning key.

13. The motor assembly according to any one of claims 1 to 12, wherein
the motor assembly is a rotating mirror motor assembly, and further comprises a permanent magnet outer rotor and a reflecting mirror fixed to a surface of the permanent magnet outer rotor.

14. A LiDAR, comprising a motor assembly according to any one of claims 1 to 13.

15. A carrier system, comprising a LiDAR according to claim 14.
